(19) Europäisches Patentamt
European Patent Office
Office européen des brevets

(11) EP 2 646 836 B1

(12) # EUROPÄISCHE PATENTSCHRIFT

(45) Veröffentlichungstag und Bekanntmachung des Hinweises auf die Patenterteilung:
**09.01.2019 Patentblatt 2019/02**

(21) Anmeldenummer: **11785420.8**

(22) Anmeldetag: **21.11.2011**

(51) Int Cl.:
***G01P 3/487*** (2006.01) ***G01P 21/02*** (2006.01)
***G01D 5/244*** (2006.01) *H02P 6/17* (2016.01)

(86) Internationale Anmeldenummer:
**PCT/EP2011/070548**

(87) Internationale Veröffentlichungsnummer:
**WO 2012/072438 (07.06.2012 Gazette 2012/23)**

(54) **VERFAHREN ZUR BESTIMMUNG DER DREHZAHL EINER SYNCHRONMASCHINE**

METHOD FOR DETERMINING THE SPEED OF A SYNCHRONOUS MACHINE

PROCÉDÉ PERMETTANT DE DÉTERMINER LA VITESSE DE ROTATION D’UNE MACHINE SYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2010 DE 102010062273**

(43) Veröffentlichungstag der Anmeldung:
**09.10.2013 Patentblatt 2013/41**

(73) Patentinhaber: **Continental Teves AG & Co. OHG 60488 Frankfurt am Main (DE)**

(72) Erfinder:
- **KAUFMANN, Tom 55566 Ippenschied (DE)**
- **PRÖGER, Thomas 63322 Rödermark (DE)**
- **LEIDECK, Jochen 64380 Roßdorf (DE)**
- **STATZNER, Jan 63263 Neu-Isenburg (DE)**
- **BITSCH, Christian 64646 Heppenheim (DE)**
- **STAUDER, Peter 55128 Mainz (DE)**

(56) Entgegenhaltungen:
**EP-A1- 2 073 020** **WO-A1-03/054556**
**DE-A1- 10 041 089** **DE-A1- 10 335 862**
**DE-A1- 19 622 042** **DE-A1-102005 019 515**
**FR-A1- 2 897 944**

EP 2 646 836 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren gemäß Oberbegriff von Anspruch 1.

In der WO 03/054556 ist ein Verfahren zum Bestimmen der Winkelposition von um einen Rotor angebrachten Ereigniserzeugungsmitteln beschrieben, wobei bei Rotation des Rotors um seine Achse eine Abtasteinrichtung die Ereigniserzeugungsmittel abtastet und die zugehörige Zeit aufzeichnet. Aus den Zeiten wird anschließend die Zeit berechnet, welche der Rotor für eine komplette Umdrehung benötigt, woraus die Durchschnittsgeschwindigkeit des Rotors über eine gesamte Umdrehung und, durch Multiplikation dieser und der Zeit zwischen zwei Abtastungen der Ereigniserzeugungsmittel innerhalb dieser kompletten Umdrehung, die relativen Winkelpositionen der Ereigniserzeugungsmittel bestimmt werden. In einem Speicher werden dabei Fehlerkorrekturwerte gespeichert, die das Maß darstellen, um das jedes Ereigniserzeugungsmittel von seiner idealen Position abweicht.

In der FR 2 897 944 wird ein Verfahren zur Kalibrierung eines Tachometers mit rotierbarem Magnetring beschrieben, wobei die Magnetpole des Magnetrings mittels Magnetsensoren erfasst werden können und eine Positionsabweichung der Magnetsensoren mittels Korrekturfaktoren korrigiert wird.

In der DE 103 35 862 A1 ist ein Verfahren zum Kalibrieren eines inkrementalen Winkelgebers mit einem, einen Geber tragenden, rotierenden Bauteil beschrieben, wobei Abweichungen von gemessenen Zeitintervallen von einem für äquidistante Segmente zu erwartenden Verhalten am aus Winkelgeber und Bauteil bestehenden System ermittelt und zur Bildung von segmentspezifischen Korrekturwerten herangezogen und die Korrekturwerte in einem Speicher gespeichert werden. Im laufenden Betrieb werden diese Korrekturwerte bei der Bestimmung des Istwertes oder aber bei der Vorgabe eines korrigierten Sollwertes berücksichtigt.

Die DE 10 2005 019 515 A1 beschreibt ein Verfahren zum Messen der Drehzahl eines elektronisch kommutierten Motors, der ein Primärteil mit einer Wicklung und ein Sekundärteil mit in Umfangsrichtung zueinander versetzten, abwechselnd in zueinander entgegengesetzte Richtungen magnetisierten Magnetsegmenten aufweist, wobei das Sekundärteil relativ zu dem Primärteil verdreht wird. Mehrere Magnetfeld-Sensoren detektieren die Lage der Magnetsegmente, wobei die Zeit zwischen zwei Änderungen des Lagemesssignals gemessen wird. Bei der Berechnung der Drehzahl wird der Einfluss von Toleranzen der Magnetsegmente hinsichtlich ihrer Positionierung und/oder ihrer Abmessung kompensiert, wobei bevorzugt für jede der Magnetsegment-Sensor-Kombinationen jeweils ein Korrekturfaktor ermittelt, gespeichert und zur Korrektur des Drehzahlsignals verwendet wird.

Insbesondere das oben beschriebene Verfahren gemäß der DE 10 2005 019 515 A1 weist den Nachteil auf, dass durch unterschiedliche Schaltschwellen der verschiedenen Magnetfeld-sensoren verursachte Fehler nur dann korrigiert werden können, wenn für beide Drehrichtungen des Motors je ein Korrekturfaktor für jede Magnetsegment-Sensor-Kombination ermittelt wird. Nach einem Stillstand des Fahrzeugs muss erneut ein vollständiger Satz von Korrekturfaktoren ermittelt und mit den gespeicherten Werten abgeglichen werden, was aufgrund der Vielzahl benötigter Korrekturfaktoren sehr zeitaufwendig ist. Auch eine Abhängigkeit der Korrekturfaktoren von der Drehzahl des Motors kann auftreten, da diese den Einfluss von Winkelfehlern und Signallaufzeiten nicht gleichzeitig korrekt beschreiben können.

Daher ist es Aufgabe der vorliegenden Erfindung, ein Verfahren zur Ermittlung der Motordrehzahl bereitzustellen, welches die genannten Nachteile nicht aufweist und welches somit das Verfahren gegenüber dem Stand der Technik verbessert.

Diese Aufgabe wird erfindungsgemäß gelöst durch das in Anspruch 1 definierte Verfahren.

Es wird also ein Verfahren bereitgestellt, bei dem die Drehzahl des Rotors einer elektronisch kommutierten Synchronmaschine mittels einem oder mehreren, insbesondere drei statorfesten, Rotorpositionssensoren und einer Zeitmesseinrichtung bestimmt und/oder geregelt wird, wobei der vom Rotor durchlaufene Winkel sowie die währenddessen verstrichene Zeit gemessen werden, wobei der gemessene vom Rotor durchlaufene Winkel mit einer oder mehreren ersten Korrekturkonstanten korrigiert wird, insbesondere indem eine Differenzbildung zur Korrektur des Einflusses von ungleichmäßiger Positionierung und/oder Ausdehnung von Positionsmarkierungen des Rotors vorgenommen wird. Unter Positionsmarkierungen des Rotors werden sektorweise unterschiedlich magnetisierte Encoderräder, das Magnetfeld des Rotors oder optische Marken verstanden. Je nach Positionsmarkierung kann ein Rotorpositionssensor daher einen magnetfeldabhängigen Schalter, einen Hallsensor, eine Lichtschranke oder ähnliche Vorrichtungen umfassen. Mittels der ersten Korrekturkonstante werden die z.B. durch ungleichmäßige Magnetisierung des Encoderrads verursachten Fehler in der ermittelten Drehzahl deutlich verringert.

Zweckmäßigerweise sind mehrere Rotorpositionssensoren vorhanden und Ungenauigkeiten der zwischen den Rotorpositionssensoren aufgespannten Winkel werden mittels einer oder mehreren zweiten Korrekturkonstanten korrigiert, insbesondere indem eine Differenzbildung zur Korrektur des Einflusses von ungenauer Positionierung der Rotorpositionssensoren vorgenommen wird. Folglich können auch durch ungenaue Platzierung der Rotorpositionssensoren verursachte Fehler deutlich reduziert werden.

Es ist vorteilhaft, wenn die gemessene Zeit korrigiert wird, wobei insbesondere mittels einer oder mehreren dritten Korrekturkonstanten durch eine Differenzbildung der Einfluss von unterschiedlichen Laufzeiten der Signale der Rotorpositionssensoren kompensiert wird.

Es ist besonders vorteilhaft, wenn eine oder mehrere dritte Korrekturkonstanten bereits während des Entwurfs und/oder der Fertigung des Motors bestimmt werden. Besonders vorteilhaft ist es, diese dritte Korrekturkonstante/n in einem nichtflüchtigen Speicher abzulegen. Dann wird kein Lernverfahren zur Bestimmung dieser Konstante/n benötigt, vielmehr kann/können diese zu Beginn eines Motorlaufs ausgelesen werden. Unter einem Motorlauf wird hierbei der Zeitraum zwischen dem Anlegen einer Versorgungsspannung an die Ansteuerschaltung und einem Trennen dieser Schaltung von der Energieversorgung verstanden.

Vorzugsweise wird/werden mindestens eine Korrekturkonstante, insbesondere die ersten Korrekturkonstanten abhängig von der Drehrichtung des Motors gewählt. Verursachen die Schaltschwellen der Rotorpositionssensoren eine richtungsabhängige Größe der Encoderradsektoren, so kann dies durch drehrichtungsabhängige erste Korrekturkonstanten kompensiert werden.

Erfindungsgemäß wird oder werden mindestens eine der Korrekturkonstanten in einem Lernverfahren ermittelt, insbesondere werden eine oder mehrere Korrekturkonstanten in einem nichtflüchtigen Speicher gespeichert. Unter einem Lernverfahren wird hierbei die Berechnung der gesuchten Korrekturkonstante/n aus unter geeigneten Bedingungen ermittelten Messdaten verstanden, welche ein- oder mehrfach stattfinden kann und über Vergleiche oder statistische Betrachtungen (je) einen Wert der gesuchten Konstante/n und gegebenenfalls (je) eine Genauigkeit liefern kann. Nachdem das Lernverfahren durchgeführt wurde, kann/können die Korrekturkonstante/n gespeichert werden. Bei folgenden Motorläufen wird keine erneute Durchführung des Lernverfahrens zur Bestimmung dieser Konstante/n benötigt, vielmehr kann/können sie zu Beginn eines Motorlaufs ausgelesen werden.

Es ist vorteilhaft, dass erfindungsgemäß eine oder mehrere zweite Korrekturkonstanten bereits während der Fertigung des Motors bestimmt werden, insbesondere indem die Positionen der Rotorpositionssensoren von einer externen Messvorrichtung präzise bestimmt werden. Besonders vorteilhaft ist es, diese zweite/n Korrekturkonstante/n in einem nichtflüchtigen Speicher abzulegen. Dann wird kein Lernverfahren zur Bestimmung dieser Konstante/n benötigt, vielmehr kann/können sie zu Beginn eines Motorlaufs ausgelesen werden.

Erfindungsgemäß findet eine Ermittlung der Korrekturkonstanten nur dann statt, wenn ein gleichmäßiger Lauf des Rotors erkannt wurde. Somit werden die Korrekturkonstanten nicht durch ungeeignete Messbedingungen während ihrer Ermittlung verfälscht.

Ganz besonders bevorzugt wird ein gleichmäßiger Lauf des Rotors anhand der Differenz der Zeitpunkte des Eintreffens der einem definierten vom Rotor durchlaufenen Mindestwinkel entsprechenden Rotorpositionssignale erkannt.

Zweckmäßigerweise werden eine oder mehrere Korrekturkonstanten aus den Differenzen der Zeitpunkte des Eintreffens verschiedener Rotorpositionssignale bestimmt.

Besonders zweckmäßig ist es, wenn eine oder mehrere erste Korrekturkonstanten aus den einem Drittel einer Umdrehung entsprechenden Zeitdifferenzen ermittelt werden. Insbesondere werden die einzelnen Zeitpunkte des Eintreffens der einem Drittel einer Umdrehung entsprechenden Rotorpositionssignalflanken sowie zweier weiterer Rotorpositionssignalflanken gespeichert und ausgewertet.

Ganz besonders zweckmäßig ist es, wenn eine oder mehrere zweite Korrekturkonstanten aus den einer vollständigen Umdrehung entsprechenden Zeitdifferenzen berechnet wird/werden, insbesondere werden dabei die einzelnen Zeitpunkte des Eintreffens der einer Umdrehung entsprechenden Rotorpositionssignalflanken sowie zweier weiterer Rotorpositionssignalflanken gespeichert und ausgewertet.

Besonders zweckmäßig ist es, wenn aus dem Verhältnis der Zeitdifferenzen für einen Rotorumlauf um den durch die beiden betrachteten Sensoren aufgespannten Winkel und der einer vollständigen Umdrehung entsprechenden Zeitdifferenzen der tatsächlich aufgespannte Winkel berechnet wird.

Besonders bevorzugt werden die ersten Korrekturkonstanten aus dem Verhältnis der einem Umlauf des Rotors um den betrachteten Sektor entsprechenden Zeitdifferenz zu der einem Drittel oder einem ganzzahligen Vielfachen eines Drittels einer Umdrehung entsprechenden Zeitdifferenz berechnet, wobei insbesondere für jeden betrachteten Sektor das Verhältnis der beiden Zeitdifferenzen in einen Winkel umgerechnet wird.

Die Erfindung betrifft auch eine Schaltungsanordnung zum Ansteuern einer elektronisch kommutierten Synchronmaschine, welche ein Verfahren durchführt, bei dem die Drehzahl einer elektronisch kommutierten Synchronmaschine mit Hilfe von einem oder mehreren, insbesondere drei statorfesten, Rotorpositionssensoren ermittelt wird, und insbesondere Bestandteil einer Schaltungsanordnung zur Steuerung oder Regelung der Bremsen eines Kraftfahrzeugs ist.

Vorzugsweise führt die Schaltungsanordnung ein Verfahren gemäß einem der Ansprüche 1 bis 11 durch.

In einer weiteren bevorzugten Ausführungsform der Erfindung weist die Schaltungsanordnung Mittel zur Ansteuerung der elektronisch kommutierten Synchronmaschine auf Basis einer feldorientierten Regelung auf, wobei eine Interpolation der Rotorpositionen durchgeführt wird und die ermittelte Rotorposition anhand einer oder mehrerer Korrekturkonstanten korrigiert wird.

Die Erfindung betrifft weiterhin die Verwendung einer solchen Schaltungsanordnung in Kraftfahrzeugen.

Weitere bevorzugte Ausführungsformen ergeben sich aus den Unteransprüchen und der nachfolgenden Beschreibung eines Ausführungsbeispiels an Hand von Figuren.

Es zeigen

Fig. 1 eine schematische Übersicht einer elektronisch kommutierten Synchronmaschine,

Fig. 2 eine beispielhafte Anordnung der Hall-Sensoren und des Encoderrads und ein Schema zur Drehzahlbestimmung, und

Fig. 3 einen Ablaufplan des beispielgemäßen Lernverfahrens.

Die in Fig. 1 dargestellte elektronisch kommutierte Synchronmaschine 1 umfasst einen elektromechanischen Energiewandler 2, eine elektronische Steuereinrichtung 3 und ein Rotorlagengebersystem 4. Neben der Nutzung als Antrieb ist auch eine Verwendung von Synchronmaschine 1 als Generator möglich, wobei folglich mechanische Bewegung in elektrische Energie gewandelt wird. Der Stator besteht typischerweise aus drei Phasenwicklungen, die hier als schwarze Rechtecke dargestellt sind. Je ein Anschluss der Phasenwicklungen U, V, W ist elektrisch mit einem Sternpunkt S verbunden. Prinzipiell wäre auch eine Dreieckschaltung der Phasenwicklungen möglich. Der permanent erregte Rotor ist über gelagerte Rotorwelle R mit magnetischem Encoderrad 7 verbunden. Das Magnetfeld des Encoderrads wird von digitalen Hallsensoren 6 abgetastet, die auch als Hallschalter bezeichnet werden. Prinzipiell kann auch das Streufeld der Rotormagneten abgetastet werden; diese bei elektronisch kommutierten Synchronmaschinen geringer Leistung vorkommende Bauform ermöglicht es, das Encoderrad einzusparen. Diese Hallschalter schalten z.B. durch, wenn sie sich im Feld eines magnetischen Nordpols befinden, und leiten keinen Strom, wenn ein magnetischer Südpol direkt benachbart ist. Hallschalter besitzen im Allgemeinen eine Hysterese, weshalb das Umschalten erst dann erfolgt, wenn das Magnetfeld eine bestimmte Umschaltschwelle überschreitet. Von jedem der typischerweise drei Hallsensoren H1, H2, H3 führt eine Signalleitung zu einer Schaltung 8, welche aus den Daten der Hallsensoren die Rotorlage und die Zeitpunkte der Lageänderungen ermittelt. Aus Rotorlagesensordaten und Zeitinformationen werden von der Drehzahlermittlungsschaltung 10 die Drehzahl und/oder mindestens ein Korrekturwert bestimmt. Neu ermittelte Korrekturwerte werden im nichtflüchtigen Speicher 11 gespeichert und können später ausgelesen werden. Anhand des elektrischen Winkels, welcher als Rotorlage ermittelt wurde, und gegebenenfalls der Drehzahl bestimmt Ansteuerschaltung 9 den an die Zuleitungen der Phasenwicklungen U, V, W anzulegenden Spannungsvektor und steuert die Halbleiterschalter der Wechselrichterbrücke 5 entsprechend an. Die elektronische Steuereinrichtung kann auch ganz oder teilweise als von einem Mikrocontroller ausgeführtes Programm implementiert sein.

Die Geometrie von Encoderrad 7 und Hallsensoren H1-H3 ist in Fig. 2 a) gezeigt, bei der die Drehachse aus der Papierebene herausragt. Die drei statorfesten Sensoren H1-H3 sind so montiert, dass bei einer Rotordrehung im Abstand von je 60° elektrischen Winkels je ein Sensor seinen Ausgangszustand wechselt. Der Zusammenhang zwischen elektrischem und mechanischem Winkel kann gemäß der folgenden Formel bestimmt werden:

$$\varphi_{el} = \varphi_{mech} \cdot p$$

Hier bezeichnet $\varphi_{el}$ den elektrischen Winkel, $\varphi_{mech}$ den mechanischen Winkel und $p$ die Polpaarzahl. Für einen geeignet gelagerten Stabmagneten als Rotor wären also elektrischer und magnetischer Winkel gleich, bei dem gezeigten Fall von $p = 7$ sind die mechanischen Winkel deutlich kleiner als die elektrischen Winkel. Sinnvolle Anordnungen der drei Hallsensoren ergeben sich bei elektrischen Winkeldifferenzen $\Delta\varphi_{Sensor_el}$ zwischen den Sensoren von

$$\Delta\varphi_{Sensor_el} = 120° + n \cdot 360°,$$

wobei $n$ eine ganze Zahl darstellt; diese gibt an, wie häufig das verwendete Kommutierungsschema durchlaufen werden muss, um den Rotor von der Position des ersten betrachteten Sensors zum nächsten zu bewegen.

Dreht sich der Rotor gegen den Uhrzeigersinn und stehen die Sensoren wie eingezeichnet, so werden die eingezeichneten Relativlagen von a nach f durchlaufen; die Hallsensoren geben die in der Tabelle angezeigten Signale aus (N:Nordpol vor Sensor, S: Südpol vor Sensor):

| Position | a | b | c | d | e | f |
|---|---|---|---|---|---|---|
| H1 | S | S | S | N | N | N |
| H3 | S | N | N | N | S | S |
| H2 | N | N | S | S | S | N |

Die Position f entspricht dabei der Anfangsposition, d.h. die Sensorsignale und das Kommutierungsschema wiederholen sich nach 360° elektrischem Winkel, was dem mechanischen Winkel eines Polpaars entspricht. Man erhält durch die drei Hallsensoren also absolute elektrische Winkel, die auf 60° genau sind.

Um die Drehzahl des Motors zu bestimmen, kann die Zeit zwischen zwei aufeinanderfolgenden Sensorflanken, also den Umschaltpunkten zweier benachbarter Hall-Sensoren, gemessen und der durchlaufene Sektorwinkel des Encoderrads auf diese Zeit bezogen werden. Nachteilhaft ist hierbei, dass sämtliche Toleranzen in der Sensorpositionierung, Encoderradfertigung und Signalverarbeitung auf die ermittelte Drehzahl einwirken. Dies wird anhand des in Fig. 2b gezeigten Schemas zur Drehzahlbestimmung in der beispielhaften Geometrie genauer erläutert. Dreht sich der Rotor in der eingezeichneten Richtung, so wird zunächst eine Rotorpositionssignalflanke erzeugt, wenn Sensor H1 von N auf S umschaltet. Nach Durchlaufen des Winkels $\varphi_E$ schaltet Sensor H2 von S auf N um, wodurch eine zweite Rotorpositionssignalflanke entsteht. Durch Messung der Zeitdifferenz $t$ zwischen dem Auftreten der zwei Signalflanken, lässt sich bei Kenntnis des zwischen den beiden Rotorpositionssensoren aufgespannten Winkels $\varphi_H$ die Winkelgeschwindigkeit $\omega$ berechnen:

$$\omega = \frac{\varphi_E - \varphi_H}{t}$$

Hierbei werden sowohl vom Rotor durchlaufener Winkel als auch von den Sensoren aufgespannter Winkel zweckmäßigerweise beide als mechanische Winkel gemessen.

Die nach diesem Verfahren bestimmte Winkelgeschwindigkeit bzw. die Drehzahl weist aufgrund unvermeidlicher Toleranzen einen Fehler auf, wobei die Genauigkeit im Einzelnen durch folgende Einflüsse begrenzt wird:

1. Wegen ungenauer Positionierung der beiden Hallsensoren entspricht der tatsächlich zwischen ihnen aufgespannte Winkel nicht dem erwarteten Wert.

2. Das Encoderrad ist nicht vollkommen gleichmäßig magnetisiert. Ungenaue Grenzen zwischen den Sektoren führen dazu, dass der gemessene von dem tatsächlich vom Rotor durchlaufenen Winkel abweicht.

3. Unterschiedliche Schaltschwellen der verschiedenen Hallsensoren beim Umschalten von N nach S gegenüber dem Umschalten von S nach N verursachen Fehler in der scheinbaren Position des Encoderrads und in dem scheinbar durchlaufenen Winkel.

4. Die elektrische Schaltungsanordnung kann dazu führen, dass sich Ein- und Ausschaltverzögerung der Hall-Schalter unterscheiden.

Prinzipiell kann die Genauigkeit durch eine geeignete Filterung des Messsignals zwar erhöht werden, jedoch beeinflusst dies die Phase des Drehzahlsignals negativ und verursacht einen Zeitverzug. Ein derart gefiltertes Signal ist für eine Drehzahlregelung mit hoher Bandbreite daher nur eingeschränkt nutzbar.

Daher werden im erfindungsgemäßen Verfahren geeignete Korrekturkonstanten für die verschiedenen Einflüsse ermittelt. Die Differenz zwischen Ein- und Ausschaltverzögerung hängt im Wesentlichen vom Typ der verwendeten Hallsensoren sowie der Auslegung der elektrischen Schaltungsanordnung ab und ist somit für alle elektronisch kommutierten Synchronmaschinen einer Bauart nahezu gleich. Sie kann daher wie alle weiteren Einflüsse, die eine konstante Zeitverzögerung verursachen, mit einer bauartabhängigen Korrekturkonstante $t_c$ berücksichtigt werden, die bevorzugt in einem nichtflüchtigen Speicher der Ansteuerschaltung hinterlegt wird.

Demgegenüber sind die durch ungenaue Magnetisierung des Encoderrads verursachten Winkelfehler $\varphi_{Ec}$ (vom betrachten Sektor abhängig) sowie durch Abweichungen in der Positionierung der Hallsensoren verursachte Winkelfehler $\varphi_{Hc}$ (abhängig von den zwei betrachteten Hallsensoren) von Motor zu Motor verschieden und werden durch motorindividuelle Korrekturkonstanten berücksichtigt.

Für eine genaue Bestimmung der Winkelgeschwindigkeit werden also die genannten Fehler korrigiert:

$$\omega = \frac{(\varphi_E - \varphi_{Ec}) - (\varphi_H - \varphi_{Hc})}{t - t_c}$$

Wenn eine gleichmäßige Drehbewegung über einen gewissen Winkel möglich ist, wie zweckmäßigerweise mindestens eine Umdrehung, so können die benötigten Korrekturkonstanten in einem Lernverfahren durch die Ansteuerschaltung des Motors ermittelt werden.

Wird anstelle eines magnetisierten Encoderrads und Hallsensoren eine sektorweise gelochte Scheibe und Gabellichtschranken verwendet, so können der Einfluss ungleichmäßiger Sektormarkierungen sowie weitere Fehler der Vorrichtung mittels des gleichen Verfahrens korrigiert werden.

In Fig. 3 ist der Ablauf eines beispielhaften erfindungsgemäßen Lernverfahrens schematisch dargestellt. Neben der im Folgenden beschriebenen Reihenfolge können bei der Durchführung des erfindungsgemäßen Verfahrens auch andere Abfolgen der einzelnen Schritte und Rechenoperationen verwendet werden. Zunächst wird in Schritt 31 geprüft, ob in einem früheren Motorlauf bereits Korrekturwerte $\varphi_{Hc}$ für eine fehlerhafte Positionierung der Hallsensoren vorhanden sind. Ist dies nicht der Fall, so werden vorzugsweise in Schritt 32 die Korrekturkonstanten $\varphi_{Hc}$ auf Null gesetzt. Eventuell gleichzeitig mit dem Lernverfahren erfolgende Drehzahlmessungen werden somit nicht durch irreführende Korrekturwerte verfälscht. Zumindest einige der folgenden Schritte des Lernverfahrens können daher auch von im Hintergrund laufenden eigenständigen Programmteilen durchgeführt werden. Lediglich das in Schritt 33 erfolgende Erfassen und Zwischenspeichern der Zeitpunkte $t_i$ des Auftretens von Hallsensorsignalflanken für 360°, also über eine Umdrehung, muss mit hoher Priorität erfolgen, da keine Flanken unerkannt bleiben dürfen. Hierbei erfolgt die Speicherung der Werte durchlaufend, zuerst eingegangene Flankenzeitpunkte werden zuerst wieder aus dem Speicher entfernt, sobald neue Flankenzeitpunkte gespeichert werden. Neben den Zeitpunkten wird auch erfasst, welcher Sensor umgeschaltet hat und eine durchlaufende Sektornummer vergeben. Während die Hallsensoren eindeutig zugeordnet werden können, ist keine einen Motorlauf überdauernde Kennzeichnung der Encoderradsektoren möglich. Der Gleichlauf des Motors wird im nun folgenden Schritt 34 geprüft. Zunächst werden die Zeiträume $T_i$ zwischen dem Auftreten zweier Signalflanken berechnet:

$$T_i = t_{i+1} - t_i$$

Dann werden die einer Umdrehung entsprechenden Zeiträume zu einer ersten Umlaufdauer aufsummiert:

$$T_{Umlauf,1} = \sum_{i=1}^{2p*3} T_i$$

Unter Berücksichtigung der unmittelbar danach eingetroffenen Signalflanke wird eine zweite Umlaufdauer ermittelt:

$$T_{Umlauf,2} = \sum_{i=2}^{2p*3+1} T_i$$

Diese Berechnung der Umlaufdauer wird für alle Signalflanken einer Motorumdrehung durchgeführt:

$$T_{Umlauf,j} = \sum_{i=j}^{2p*3+j-1} T_i$$
$$j = 1..2p*3$$

Stimmen die berechneten Umlaufdauern im Rahmen der gewünschten Genauigkeit $\varepsilon$ über eine komplette Motorumdrehung überein ($|\max\{T_{Umlauf,i}\} - \min\{T_{Umlauf,k}\}| < \varepsilon$), so liegt ein gleichmäßiger Lauf des Motors für eine Motorumdrehung vor; die Korrekturkonstanten können berechnet werden. Andernfalls erfolgt ein erneutes Einlesen und Zwischenspeichern von Signalflanken, bis die Gleichlaufbedingung erfüllt ist. Eine Überprüfung des Gleichlaufs erfordert also zwei Umdrehungen, wobei bevorzugt die Zeitpunkte für eine Umdrehung umlaufend zwischengespeichert werden. Prinzipiell kann eine Überprüfung des Gleichlaufs auch mit anderen Methoden als dem hier beschriebenen Ringspeicher vorgenommen werden.

Um Korrekturwerte für eine fehlerhafte Positionierung der Hallsensoren zu erhalten, werden die Zeiträume der zu jeweils 120° bzw. 1/3 einer Umdrehung gehörenden Signalflanken aufsummiert:

$$T_{H12} = \sum_{i=1}^{2p} T_i \;;\quad T_{H23} = \sum_{i=2p+1}^{2\cdot 2p} T_i \;;\quad T_{H31} = \sum_{i=2\cdot 2p+1}^{3\cdot 2p} T_i \,.$$

Bezugnehmend auf Fig. 2a) entspricht die den tatsächlich zwischen Sensor 1 und 2 aufgespannten Winkel charakterisierende erste Zeit $T_{H12}$ einem Durchlaufen der Positionen Encoderstelle x1 vor H1 bis zur Position Encoderstelle x1 vor H2, die das Kreissegment zwischen den Sensoren 2 und 3 charakterisierende Zeit $T_{H23}$ entspricht dem Durchlaufen der Positionen Encoderstelle x1 vor H2 bis zur Position Encoderstelle x1 vor H3, während die den Sektor zwischen den Sensoren 3 und 1 charakterisierende Zeit $T_{H31}$ dem Durchlaufen der Positionen Encoderstelle x1 vor H3 bis zur Position Encoderstelle x1 vor H1 entspricht. Bei der Betrachtung eines kompletten Umlaufs überstreicht jeder Magnetisierungswechsels $x_i$ des Encoderrings jeden zwischen den Sensoren aufgespannten Winkel $\varphi_H$ genau einmal. Wird eine größere Anzahl von Zeiträumen $T_i$ zwischengespeichert, so kann die Genauigkeit der berechneten Zeiträume durch Mittelung erhöht werden.

Unter Vernachlässigung von durch unterschiedliche Schaltschwellen der Hallsensoren verursachten Fehlern genügt es, wenn mindestens 2p+2 aufeinanderfolgende Zeiträume $T_i$ gespeichert sind:

$$T_{H12} = \sum_{i=1}^{2p} T_i \;;\quad T_{H31} = \sum_{i=2}^{2p+1} T_i \;;\quad T_{H23} = \sum_{i=3}^{2p+2} T_i$$

Hierbei entspricht die erste Zeit $T_{H12}$ einem Durchlaufen der Positionen Encoderstelle x1 vor H1 bis zur Position Encoderstelle x1 vor H2, die Zeit $T_{H23}$ entspricht dem Durchlaufen der Positionen Encoderstelle x2 vor H2 bis zur Position Encoderstelle x2 vor H3, während $T_{H31}$ dem Durchlaufen der Positionen Encoderstelle x3 vor H3 bis zur Position Encoderstelle x3 vor H1 entspricht.

Bezieht man die ermittelten Zeiten auf die Zeit für einen vollständigen Umlauf des Rotors, so können die Korrekturkonstanten $\varphi_{Hc12}$, $\varphi_{Hc23}$ und $\varphi_{Hc31}$ berechnet werden:

$$\varphi_{Hc12} = 360° \frac{T_{H12}}{T_{Umlauf}} - \varphi_{H12}$$

$$\varphi_{Hc23} = 360° \frac{T_{H23}}{T_{Umlauf}} - \varphi_{H23}$$

$$\varphi_{Hc31} = 360° \frac{T_{H31}}{T_{Umlauf}} - \varphi_{H31}$$

Die Korrekturkonstanten geben also die Differenz zwischen tatsächlich aufgespanntem Winkel und

Sollwinkel $\varphi_H$ zwischen den zwei betrachteten Hallsensoren an. Die in Fig. 2 gezeigte Geometrie weist eine gleichmäßige Verteilung der Hallsensoren auf:

$$\varphi_{H12} = \varphi_{H23} = \varphi_{H31} = \varphi_H = 120°$$

Bei einer ungleichmäßigen Verteilung der Hallsensoren muss das Vorgehen entsprechend den dann gültigen Winkeldifferenzen angepasst werden.

In Schritt 36 werden die berechneten Korrekturkonstanten gespeichert; weiterhin werden in geeigneter Weise gemittelte Zeiträume bestimmt, welche bei der in Schritt 40 erfolgenden Berechnung der Korrekturwerte für eine ungenaue Magnetisierung des Encoderrads verwendet werden können.

Wenn die Prüfung in Schritt 31 das Vorhandensein von Korrekturwerten $\varphi_{Hc}$ für ungenaue Positionierung der Hallsensoren zeigt, werden diese in Schritt 37 eingelesen und stehen dann für zukünftige Berechnungen zur Verfügung.

Bei bekannten Positionen der Hallsensoren ist es ausreichend, den Gleichlauf über einen zwischen zwei Hallsensoren aufgespannten Winkel von vorzugsweise 120° bzw. 1/3 Umdrehung zu prüfen, wofür der Rotor also um 2/3 Umdrehungen sowie zwei weitere Signalflanken umlaufen muss. Dabei werden in Schritt 38 die Zeitpunkte des Auftretens der Signalflanken für 120° sowie zweier weiterer Signalflanken durchlaufend gespeichert.

Eine geänderte Anzahl der Hallsensoren kann durch Anpassen des für eine Speicherung vorgesehen Umlaufwinkels berücksichtigt werden. Bei ungleichmäßig verteilten Sensoren müssen gegebenenfalls die Signalflanken eines gewählten Sensorpaars über eine vollständige Umdrehung betrachtet werden.

Für die Überprüfung des Gleichlaufs werden zunächst die Zeiträume $T_i$ zwischen zwei aufeinander folgenden Signalflanken berechnet:

$$T_i = t_{i+1} - t_i$$

Dann werden die 1/3 einer Umdrehung entsprechenden Zeiträume zu einer ersten Zeitdauer aufsummiert:

$$T_{Drittel,1} = \sum_{i=1}^{2p} T_i$$

Unter Berücksichtigung der danach eingetroffenen, vom gleichen Hallschalter erzeugten Signalflanke wird eine zweite Zeitdauer ermittelt:

$$T_{Drittel,2} = \sum_{i=4}^{2p+3} T_i$$

Diese Berechnung der Zeitdauern wird für alle Signalflanken eines Hallschalters durchgeführt:

$$T_{Drittel,j} = \sum_{i=3j+1}^{2p+3j} T_i$$

Stimmen die berechneten Werte für die Zeitdauern für 1/3 einer Umdrehung im Rahmen der gewünschten Genauigkeit $\varepsilon$ überein ($|\max\{T_{Drittel,i}\} - \min\{T_{Drittel,k}\}| < \varepsilon$), so wird angenommen, dass ein gleichmäßiger Lauf des Motors vorliegt; die Korrekturkonstanten können berechnet werden. Andernfalls erfolgt ein erneutes Einlesen und Zwischenspeichern von Signalflanken, bis die Gleichlaufbedingung erfüllt ist. Das Kriterium kann noch verschärft werden, in dem die entsprechenden Zeitdauern auch bei Flanken von den anderen Hallschaltern in gleicher Weise gebildet und jeweils auf Konstanz überprüft werden.

Nun kann in Schritt 40 die Berechnung der Korrekturkonstanten für ungleichmäßige Magnetisierung des Encoderrads erfolgen.

Zunächst wird die Winkelgeschwindigkeit $\omega$ anhand entweder der gemittelten Zeitdauern aus Schritt 38 oder der gemittelten Zeiträume aus Schritt 36 berechnet:

$$\omega = \frac{360°}{\overline{T}_{Umlauf}} = \frac{120°}{\overline{T}_{Drittel}}$$

Anschließend erfolgt die Berechnung der Korrekturwerte des betrachteten Sektors:

$$\varphi_{Ec} = \varphi_E - \omega \cdot (t - t_c) - \varphi_H + \varphi_{Hc}$$

Die Korrekturkonstante $\varphi_{Hc}$ wird gemäß den am Anfang und Ende des Sektorumlaufs schaltenden Hallsensoren gewählt. Die Berechnung von $\varphi_{Ec}$ wird für alle Sektoren des Encoderrads nacheinander durchgeführt.

Eine Speicherung der Korrekturwerte über einen Motorlauf hinaus ist dann möglich, wenn der Rotor bei ausgeschalteter Maschine gegen Verdrehen gesichert ist. Falls der Elektromotor in Verbindung mit einem geeigneten Getriebe als Antrieb einer Reibbremse für ein Kraftfahrzeug verwendet wird, so kann dies durch die Betätigung einer Parkbremse gewährleistet werden. Dann werden einmal ermittelte Korrekturwerte vorzugsweise zwischengespeichert und bei nachfolgenden Motorläufen verwendet, ohne dass ein erneutes Lernverfahren durchgeführt werden muss. Ist keine Verdrehsicherung des Motors vorhanden, so müssen die Korrekturkonstanten für ungleichmäßige Magnetisierung des Encoderrads bei Beginn eines Motorlaufs jeweils neu gelernt werden.

Gemäß einer alternativen bevorzugten Ausführungsform der Erfindung werden in einem Speicher vorliegende, bereits früher gelernte Korrekturwerte verwendet, um die neu ermittelten Korrekturwerte weiter zu verbessern. Zweckmäßigerweise werden die gespeicherten Korrekturwerte zyklisch vertauscht, bis die Summe der Quadrate der Abweichungen zwischen neu gelernten und gespeicherten Konstanten einen minimalen Wert erreicht. Es ist besonders vorteilhaft, wenn nach einer erfolgten Zuordnung neu gelernte und gespeicherte Korrekturwerte gemittelt werden, wobei die gespeicherten Konstanten insbesondere umso höher gewichtet werden, je mehr gelernte Korrekturwerte bei ihrer Berechnung einbezogen wurden.

In einer weiteren bevorzugten Ausführungsform der Erfindung wird die gewünschte Genauigkeit $\varepsilon$ angepasst, sobald bereits eine Anzahl von Korrekturwerten gelernt wurde. Ein erneutes Lernverfahren wird erst dann durchgeführt, wenn der Motor deutlich geringere Schwankungen im Gleichlauf hat.

Wird eine Bestimmung von Korrekturwerten wiederholt durchgeführt, so ist es besonders zweckmäßig, wenn die Gewichtung der Korrekturkonstanten anhand von vorliegenden Gleichlaufschwankungen und Anzahl der zu Ihrer Berechnung verwendeten Messdaten erfolgt.

In einer weiteren bevorzugten Ausführungsform der Erfindung werden die Korrekturkonstanten $\varphi_{Ec}$ für beide Drehrichtungen des Motors getrennt ermittelt, wobei zweckmäßigerweise zunächst für eine Drehrichtung des Motors der Gleichlauf geprüft und die Korrekturkonstanten berechnet werden und bei einer Änderung der Drehrichtung ebenfalls der Gleichlauf geprüft und die Korrekturkonstanten berechnet werden. Es ist besonders zweckmäßig, wenn bei jeder Drehrichtungsänderung erneut eine Berechnung der Korrekturkonstanten vorgenommen wird, und der gewichtete oder ungewichtete Mittelwert bereits gespeicherter und neu ermittelter Korrekturkonstanten gebildet wird.

Gemäß einer weiteren bevorzugten Ausführungsform der Erfindung erfolgt die Ansteuerung des Motors anhand einer Interpolation der Rotorposition, welche auf den Daten von einem oder mehreren Rotorpositionssensoren basiert. Dies ermöglicht es, die in Zusammenhang mit Fig. 2 beschriebene Blockkommutierung, bei der diskrete Basisspannungsvektoren angelegt werden, durch eine feldorientierte Steuerung oder Regelung des Motors nach bekannten Verfahren zu ersetzen, insbesondere der Raumzeigermodulation (siehe z.B. Dierk Schröder, Elektrische Antriebe - Regelung von Antriebssystemen, Springer, Berlin, Heidelberg, 2009). Die mit Hilfe des erfindungsgemäßen Lernverfahrens ermittelten Konstanten zur Korrektur von Hallsensorpositionierungsfehlern ermöglichen es, den optimalen Kommutierungswinkel verhältnismäßig genau zu treffen, wodurch sich der Gleichlauf des Motors verbessert.

## Patentansprüche

1. Verfahren, bei dem die Drehzahl des Rotors einer elektronisch kommutierten Synchronmaschine mittels mehreren, insbesondere drei statorfesten, Rotorpositionssensoren und einer Zeitmesseinrichtung bestimmt und/oder geregelt wird, wobei der vom Rotor durchlaufene Winkel sowie die währenddessen verstrichene Zeit gemessen werden, wobei

   - eine oder mehrere erste Korrekturkonstanten ($\varphi_{Hc}$) für die Durchführung des Verfahrens vorgesehen sind und zur Korrektur des Einflusses von ungleichmäßiger Positionierung und/oder Ausdehnung von Positionsmarkierungen des Rotors der gemessene vom Rotor durchlaufene Winkel mit der einen oder den mehreren ersten Korrekturkonstanten ( $\varphi_{Hc}$) korrigiert wird,

   **dadurch gekennzeichnet, dass**

   - die eine oder mehreren ersten Korrekturkonstanten ($\varphi_{Hc}$ ) in einem Lernverfahren ermittelt werden und unter Berücksichtigung von ermittelten Messdaten berechnet werden,
   - eine oder mehrere zweite Korrekturkonstanten ($\varphi_{Ec}$) für die Durchführung des Verfahrens vorgesehen sind, welche während der Fertigung der Synchronmaschine bestimmt werden und Ungenauigkeiten der zwischen den Rotorpositionssensoren aufgespannten Winkel mittels der einen oder den mehreren zweiten Korrekturkonstanten ($\varphi_{Ec}$) korrigiert werden, wobei
   - eine Ermittlung der Korrekturkonstanten ($\varphi_{Hc}$, $\varphi_{Ec}$) nur dann stattfindet, wenn ein gleichmäßiger Lauf des Rotors erkannt wurde.

2. Verfahren nach Anspruch 1, **dadurch gekennzeichnet, dass** zur Korrektur des Einflusses von ungleichmäßiger Positionierung und/oder Ausdehnung von Positionsmarkierungen des Rotors eine Differenzbildung vorgenommen wird und zur Korrektur des Einflusses von ungenauer Positionierung der Rotorpositionssensoren ebenfalls eine Differenzbildung vorgenommen wird.

3. Verfahren nach Anspruch 1 oder 2, **dadurch gekennzeichnet, dass** die gemessene Zeit korrigiert wird, wobei insbesondere mittels einer oder mehreren dritten Korrekturkonstanten durch eine Differenzbildung der Einfluss von unterschiedlichen Laufzeiten der Signale der Rotorpositionssensoren kompensiert wird.

4. Verfahren nach einem der vorhergehenden Ansprüche, **dadurch gekennzeichnet, dass** mindestens eine der Korrekturkonstanten abhängig von der Drehrichtung des Motors gewählt wird/werden, insbesondere die erste Korrekturkonstante/n ($\varphi_{Hc}$).

5. Verfahren nach einem der vorhergehenden Ansprüche, **dadurch gekennzeichnet, dass** die eine oder mehrere Korrekturkonstanten in einem nichtflüchtigen Speicher gespeichert wird/werden.

**6.** Verfahren nach einem der vorhergehenden Ansprüche, **dadurch gekennzeichnet, dass** ein gleichmäßiger Lauf des Rotors anhand der Differenz der Zeitpunkte des Eintreffens der einem definierten vom Rotor durchlaufenen Mindestwinkel entsprechenden Rotorpositionssignale erkannt wird.

**7.** Verfahren nach einem der vorhergehenden Ansprüche, **dadurch gekennzeichnet, dass** die eine oder mehrere Korrekturkonstanten aus den Differenzen der Zeitpunkte des Eintreffens verschiedener Rotorpositionssignale bestimmt werden.

**8.** Verfahren nach Anspruch 7, **dadurch gekennzeichnet, dass** die eine oder mehrere erste Korrekturkonstanten ($\varphi_{Hc}$) aus den einem Drittel einer Umdrehung entsprechenden Zeitdifferenzen ermittelt werden, insbesondere die einzelnen Zeitpunkte des Eintreffens der einem Drittel einer Umdrehung entsprechenden Rotorpositionssignalflanken sowie zweier weiterer Rotorpositionssignalflanken gespeichert und ausgewertet werden.

**9.** Verfahren nach einem der Ansprüche 7 bis 8, **dadurch gekennzeichnet, dass** die eine oder mehrere zweite Korrekturkonstanten ($\varphi_{Ec}$) aus den einer vollständigen Umdrehung entsprechenden Zeitdifferenzen berechnet werden, insbesondere die einzelnen Zeitpunkte des Eintreffens der einer Umdrehung entsprechenden Rotorpositionssignalflanken sowie zweier weiterer Rotorpositionssignalflanken gespeichert und ausgewertet werden.

**10.** Verfahren nach einem der Ansprüche 7 bis 9, **dadurch gekennzeichnet, dass** aus dem Verhältnis der Zeitdifferenzen für einen Rotorumlauf um den durch die beiden betrachteten Sensoren aufgespannten Winkel und der einer vollständigen Umdrehung entsprechenden Zeitdifferenzen der tatsächlich aufgespannte Winkel berechnet wird.

**11.** Verfahren nach einem der Ansprüche 7 bis 10, **dadurch gekennzeichnet, dass** die ersten Korrekturkonstanten ($\varphi_{Hc}$) aus dem Verhältnis der einem Umlauf des Rotors um den betrachteten Sektor entsprechenden Zeitdifferenz zu der einem Drittel oder einem ganzzahligen Vielfachen eines Drittels einer Umdrehung entsprechenden Zeitdifferenz berechnet werden, wobei insbesondere für jeden betrachteten Sektor das Verhältnis der beiden Zeitdifferenzen in einen Winkel umgerechnet wird.

## Claims

**1.** Method, in which the speed of the rotor of an electronically commutated synchronous machine is determined and/or controlled by means of a plurality of, in particular three, rotor position sensors fixed to the stator and a timing device, wherein the angle traversed by the rotor and the time that has lapsed during this are measured, wherein

- one or more first correction constants ($\varphi_{Hc}$) are provided for carrying out the method and, for correcting the influence of nonuniform positioning and/or expansion of position markers on the rotor, the measured angle traversed by the rotor is corrected by the one or more first correction constants ($\varphi_{Hc}$)

**characterized in that**

- the one or more first correction constants ($\varphi_{Hc}$) are determined in a learning process and are calculated taking determined measurement data into consideration,
- one or more second correction constants ($\varphi_{Ec}$) are provided for carrying out the method, which are determined during the manufacture of the synchronous machine, and inaccuracies in the angles spanned between the rotor position sensors are corrected by means of the one or more second correction constants ($\varphi_{Ec}$), wherein
- determination of the correction constants ($\varphi_{Hc}$, $\varphi_{Ec}$) only takes place when uniform running of the rotor has been identified.

**2.** Method according to Claim 1, **characterized in that**, for correcting the influence of nonuniform positioning and/or expansion of position markers on the rotor, a difference is formed and, for correcting the influence of imprecise positioning of the rotor position sensors, a difference is likewise formed.

**3.** Method according to Claim 1 or 2, **characterized in that** the measured time is corrected, wherein in particular the influence of different propagation times of the signals of the rotor position sensors is compensated for by means of one or more third correction constants by forming a difference.

**4.** Method according to one of the preceding claims, **characterized in that** at least one of the correction constants is/are selected depending on the direction of rotation of the motor, in particular the first correction constant (s) ($\varphi_{Hc}$).

**5.** Method according to one of the preceding claims, **characterized in that** the one or more correction constants is/are stored in a nonvolatile memory.

**6.** Method according to one of the preceding Claims, **characterized in that** uniform running of the rotor is identified on the basis of the difference in the times of arrival of the rotor position signals corresponding to a defined minimum angle traversed by the rotor.

**7.** Method according to one of the preceding claims, **characterized in that** the one or more correction constants are determined from the differences in the times of arrival of different rotor position signals.

**8.** Method according to Claim 7, **characterized in that** the one or more first correction constants ($\varphi_{Hc}$) are determined from the time differences corresponding to a third of a revolution, in particular the individual times of arrival of the rotor position signal edges corresponding to a third of a revolution and of two further rotor position signal edges are stored and evaluated.

**9.** Method according to one of Claims 7 to 8, **characterized in that** the one or more second correction constants ($\varphi_{Ec}$) are calculated from the time differences corresponding to a complete revolution, in particular the individual times of arrival of the rotor position signal edges corresponding to a revolution and of two further rotor position signal edges are stored and evaluated.

**10.** Method according to one of Claims 7 to 9, **characterized in that** the actual spanned angle is calculated from the ratio of the time differences for a rotor rotation through the angle spanned by the two sensors under consideration to the time differences corresponding to a complete revolution.

**11.** Method according to one of Claims 7 to 10, **characterized in that** the first correction constants ($\varphi_{Hc}$) are calculated from the ratio of the time difference corresponding to a rotation of the rotor through the sector under consideration to the time difference corresponding to a third or an integral multiple of a third of a revolution, wherein the ratio of the two time differences is converted into an angle in particular for each sector under consideration.

## Revendications

**1.** Procédé, lors duquel la vitesse de rotation du rotor d'une machine synchrone à commutation électronique est déterminée et/ou réglée au moyen de plusieurs, notamment de trois capteurs de la position du rotor fixes sur le stator et d'un dispositif de mesure du temps, l'angle traversé par le rotor, ainsi que le temps écoulé pendant ce temps étant mesurés,

- une ou plusieurs premières constantes de correction ($\varphi_{Hc}$) étant prévues pour la réalisation du procédé et pour la correction de l'influence d'un positionnement et/ou d'une extension irrégulier(ère)s de marquages de position du rotor, l'angle mesuré, traversé par le rotor étant corrigé à l'aide de la première ou des premières constantes de correction ($\varphi_{Hc}$),

**caractérisé en ce que**

- l'une ou les plusieurs premières constantes de correction ($\varphi_{Hc}$) sont déterminées au cours d'un procédé d'apprentissage et calculées en considérant des données de mesures déterminées,
- une ou plusieurs deuxièmes constantes de correction ($\varphi_{Ec}$) sont prévues pour la réalisation du procédé, lesquelles sont déterminées pendant la production de la machine synchrone et des inexactitudes des angles formés entre les capteurs de la position du rotor sont corrigées au moyen de l'une ou des plusieurs deuxièmes constantes de correction ($\varphi_{Ec}$),
- une détermination des constantes de correction ($\varphi_{Hc}$, $\varphi_{Ec}$) n'ayant lieu que si un fonctionnement régulier du rotor a été identifié.

**2.** Procédé selon la revendication 1, **caractérisé en ce qu'**une soustraction pour la correction de l'influence d'un positionnement et/ou d'une extension irrégulier(ère)s de marquages de position du rotor est effectuée et une soustraction pour la correction de l'influence d'un positionnement inexact des capteurs de la position du rotor est également effectuée.

**3.** Procédé selon la revendication 1 ou 2, **caractérisé en ce que** le temps mesuré est corrigé, notamment au moyen d'une ou de plusieurs troisièmes constantes de correction, l'influence de différentes périodes des signaux des capteurs de la position du rotor étant compensée par une soustraction.

**4.** Procédé selon l'une quelconque des revendications précédentes, **caractérisé en ce qu'**au moins l'une des constantes de correction est sélectionnée en fonction du sens de rotation du moteur, notamment la/les première (s) constante (s) de correction ($\varphi_{Hc}$).

**5.** Procédé selon l'une quelconque des revendications précédentes, **caractérisé en ce qu'**une ou plusieurs constantes de correction est/sont mémorisée(s) dans une mémoire non volatile.

**6.** Procédé selon l'une quelconque des revendications précédentes, **caractérisé en ce qu'**un fonctionnement régulier du rotor est identifié à l'aide de la différence entre les moments de la production des signaux de position du rotor correspondant à un angle minimum défini, traversé par le rotor.

7. Procédé selon l'une quelconque des revendications précédentes, **caractérisé en ce qu'**une ou plusieurs constantes de correction est/sont déterminée(s) à partir des différences des moments de la production de différents signaux de position du rotor.

8. Procédé selon la revendication 7, **caractérisé en ce qu'**une ou plusieurs premières constantes de correction $(\varphi_{Hc})$ est/sont déterminée à partir des différences de temps correspondant à un tiers d'un tour, notamment les moments individuels de la production des flancs des signaux de la position du rotor correspondant à un tiers d'un tour, ainsi que de deux flancs de signaux supplémentaires de la position du rotor sont mémorisés et évalués.

9. Procédé selon l'une quelconque des revendications 7 à 8, **caractérisé en ce que** l'une ou les plusieurs deuxièmes constantes de correction $(\varphi_{Ec})$ sont calculées à partir des différences de temps correspondant à un tour complet, notamment les moments individuels de la production des flancs de signaux de la position du rotor correspondant à un tour, ainsi que de deux flancs de signaux supplémentaires de la position du rotor sont mémorisés et évalués.

10. Procédé selon l'une quelconque des revendications 7 à 9, **caractérisé en ce que** l'angle effectivement formé est calculé à partir du rapport entre les différences de temps pour un tour du rotor autour de l'angle formé par les deux capteurs considérés et les différences de temps correspondant à un tour complet.

11. Procédé selon l'une quelconque des revendications 7 à 10, **caractérisé en ce que** les premières constantes de correction $(\varphi_{Hc})$ sont calculées à partir du rapport entre la différence de temps correspondant à un tour du rotor autour du secteur considéré et la différence de temps correspondant à un tiers ou à un multiple entier d'un tiers d'un tour, notamment pour chaque secteur considéré, le rapport des deux différences de temps étant converti en un angle.

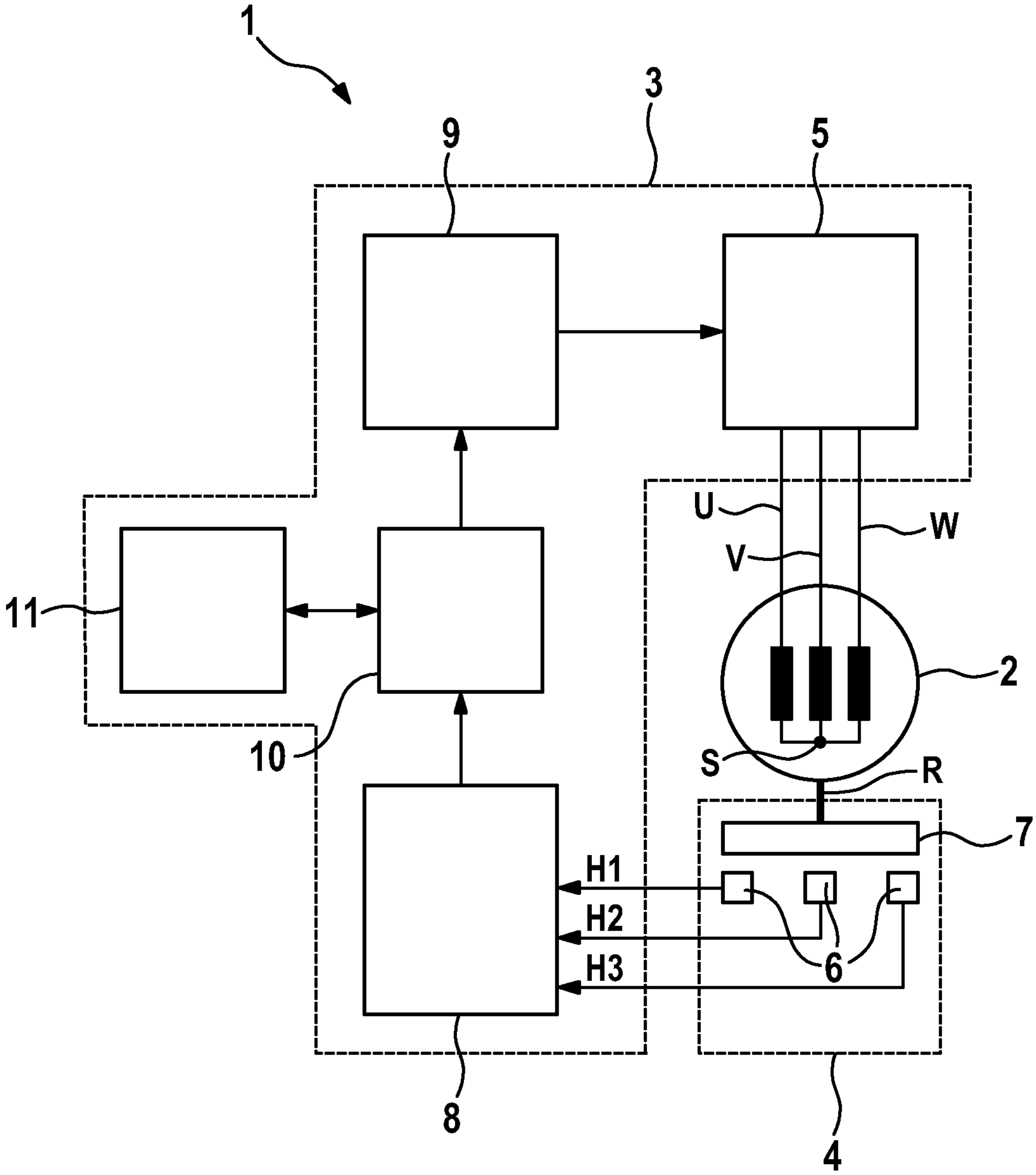


Fig. 1

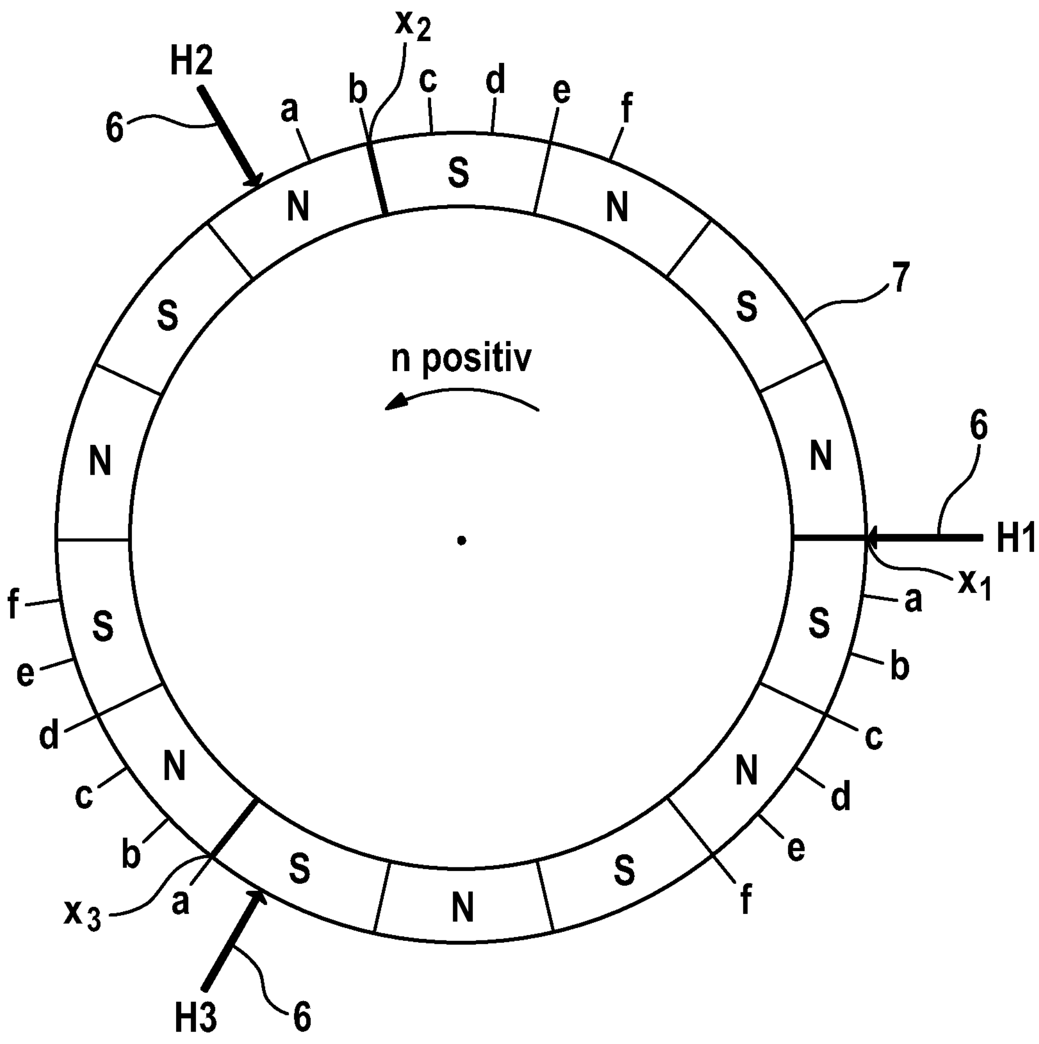
x2
H2
a
b
c
d
e
f
6
N
S
N
S
7
S
n positiv
N
N
6
H1
x1
f
S
S
a
e
b
d
c
N
N
c
d
b
S
S
e
x3
a
N
f
H3
6

Fig. 2a)

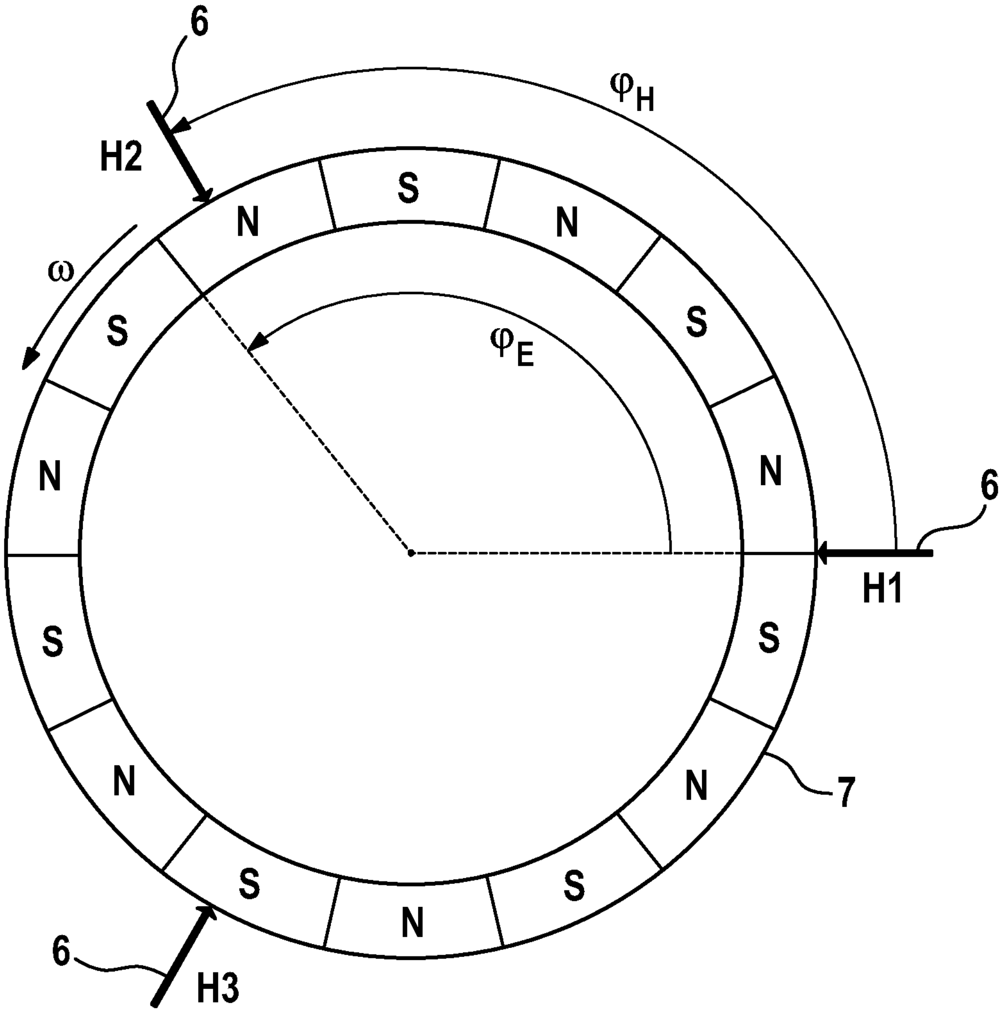


Fig. 2b)

Fig. 3

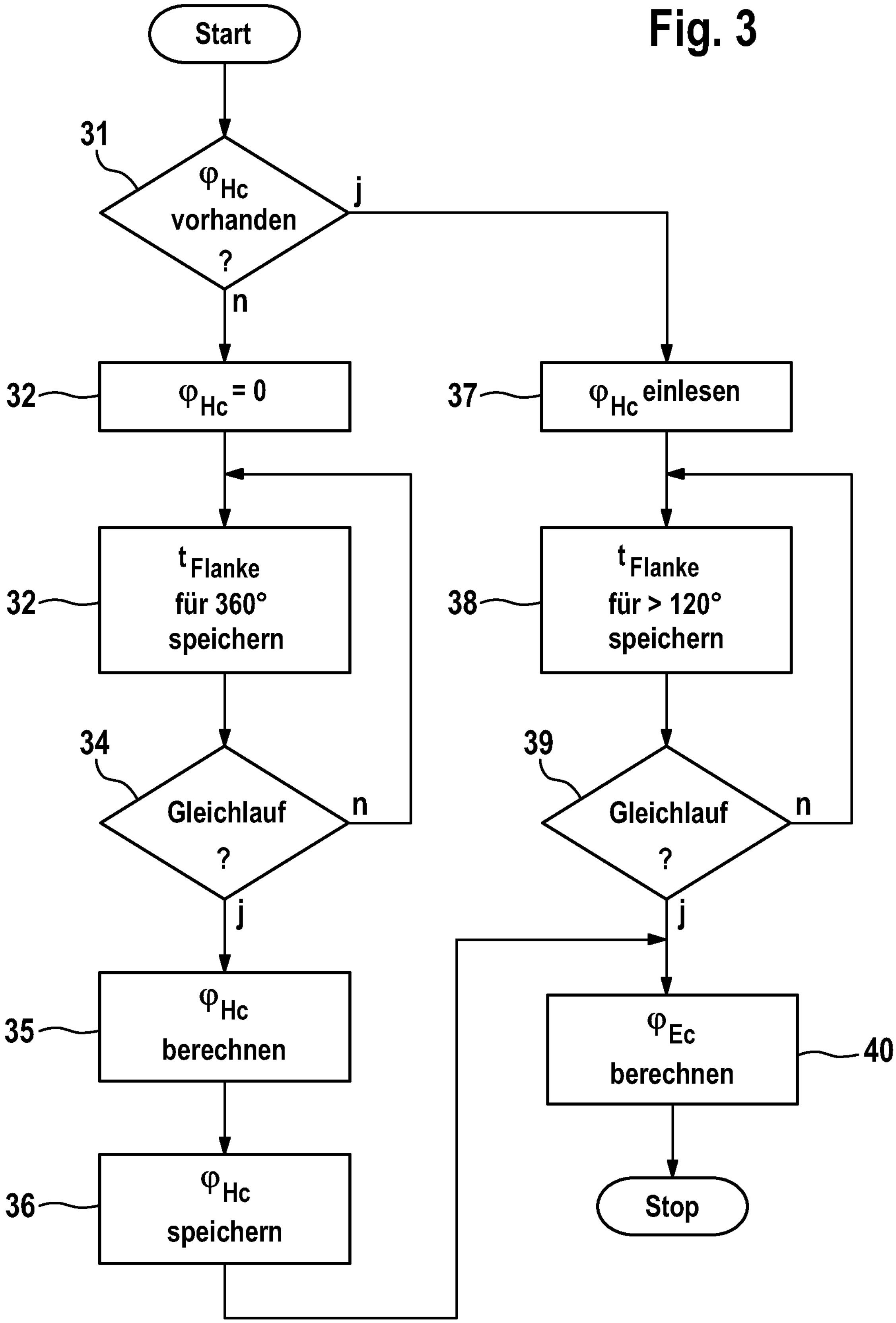
Start
31
$\varphi_{Hc}$ vorhanden ?
j
n
32
$\varphi_{Hc} = 0$
37
$\varphi_{Hc}$ einlesen
32
$t_{Flanke}$ für 360° speichern
38
$t_{Flanke}$ für > 120° speichern
34
Gleichlauf ?
n
j
39
Gleichlauf ?
n
j
35
$\varphi_{Hc}$ berechnen
40
$\varphi_{Ec}$ berechnen
36
$\varphi_{Hc}$ speichern
Stop

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03054556 A
- FR 2897944
- DE 10335862 A1
- DE 102005019515 A1